# EUROPEAN PATENT APPLICATION

(11) **EP 1 111 520 A2**
(43) Date of publication of application: **27.06.2001**
(21) Application number: 00311673.8
(22) Date of filing: 22.12.2000
(51) Int. Cl.: G06F 17/30

(54) **Internet communication**

(30) Priority: 24.12.1999 GB 9930717
(71) Applicant: Ooip Syndication B.V., 1092 AT Amsterdam (NL)
(72) Inventor: de Jong, Martin, 1058 XT Amsterdam (NL); Habraken, Alysa Evelynn, 1011 ML Amsterdam (NL)
(74) Representative: Watkin, Timothy Lawrence Harvey

(57) **Abstract**

A method is proposed for integrating data taken from two or more web servers. When a user connects to a first server using a browser, the first server transmits to the browser data defining a web page format and the address of a file on a second server which contains data to be converted into the format. The browser is instructed to perform an authorisation operation to meet security requirements set by the second server, to extract the data on the second server. The browser subsequently presents to the user a single web page incorporating the data from the second server in the format of the first server. The method can be implemented using a conventional browser, by making available to the browser programs which manage the communication with the second server, and the authorisation procedure. Alternatively, the method can be implemented as a new generation of browser program product.

## Description

### Field of the Invention

The present invention relates to methods and systems for integrating data from two or more web servers, so that a user accessing a page supported by a first server is shown that page incorporating data from a second server. It further relates to methods and devices for defining new commands, such as a command to incorporate data from the second server, within an HTML file stored on the first server. The invention further relates to computer program products which may be run on a computer to cause the computer to preform a method according to the invention.

### Background of the Invention

Recently there has been much interest in sharing content among websites and servers. Thus, an item of content such as a document (e.g. a news item) or an application, can be made available by copying it to a plurality of servers, each of which optionally formats the content according to its own presentation style, and stores it. Users can then access the content by accessing any of the servers using a conventional browser. By including such imported content, owners of the sites can make their sites more interesting, while conversely the providers of content can publicise their content more widely. The content providers obtain a financial return by charging the site owners, or by displaying advertising to the user in association with the content.

The above system has the disadvantage that information storage is inefficient, since the same content is stored at multiple locations. In an alternative proposal, the user accesses one of a number of first servers, each of which contains a link (e.g. hyperlink connection) to the same content storage server which stores content. When a user accesses one of the first servers and requests the content, a connection is made with the content storage server.

This may for example be by providing a page on the first server to be a frame set, with a frame including a link to the content storage server. The disadvantage of this arrangement is that the first server then loses interaction with the user; for example, it has no control over the format of the content obtained by the user, and cannot adapt the content to its own house style. For example, if one frame set is defined by the first server to have a red background, and the content server defines the format of another frame set to have a blue background, the resulting appearance is untidy, and may even be difficult to read. Even more significant problems can arise due to differences in typeface, characters in special fonts (e.g. non-English language fonts), etc. Present browsers do not permit "communication" between the frames to permit a uniform appearance of the frame sets.

Furthermore, the provider of the content will usually not wish to make its content so freely available that any person can access it by simply following a hyperlink. For example, the content server may only wish to enable access to its data to someone of known identity, and in this case the user may have to perform some form of login in the frame. This of course is inconvenient, and makes the user aware that he is no longer communicating with the first server.

A second possibility, upon a user requesting content from a first server, is for the first server to contact the content storage server, extract the content, convert the content into the format of the first server, and present to the user a page in that format containing the content. However, this puts great strain on the computing resources of the first server, which may have to deal simultaneously with a large number of users.

### Summary of the Invention

In a first aspect, the present invention aims to provide methods and systems for combining data stored on two or more servers.

In general terms, this aspect of the present invention proposes that the present invention proposes that a web page stored on a first server contains an indication that content is to be included from a second server (i.e. the address of the second server and the location of a data file on the second server storing the content). Upon a user opening the page, the first server triggers the user's browser to communicate with the second server, enabling the user to access the data file. This communication involves passing to the second server sufficient information about the user and/or the first server, to meet any criteria the owner of the content may set to decide whether to permit access to the content. The user's computer (e.g. the user's browser, or, conceivably but less preferably, the user's ISP), may format the data according to a format defined by the first server. Thus, the user is preferably not even aware that a connection with a second server has been made.

Since the content is generally stored only at the second server, this storage system is an efficient one. Furthermore, since the formatting is preferably performed by the user's computer, there is no requirement for formatting at the first server, reducing the system requirements of the first server. In fact, the present invention makes it possible for a site supported by a first server with very limited system requirements, to make available to a large number of users who access the site, content from one or more second servers, just as if the content were stored on the first server. Furthermore, the storage of the content at a single location (the second server) means that it can be updated by a single updating operation.

Present browsers are intentionally to limit the ways in which data from different servers may be combined in order to prevent the creation of "rogue" pages. Browsers communicate via the HTTP-protocol (and in future may conform to the ICE protocol), but the limitations on combining data from different servers is not an aspect of the HTTP-protocol, but of the browser software itself.

To implement the present invention in combination with presently available browsers, the inventors propose that the web page may contain an instruction to a browser to run a first program (which may be written in a programming language such as Javascript). The first program manages the processing of the web page in the case that content from the second server is to be included.

Thus, upon a user opening a page, the user's browser scans the page in the conventional way, and in the case that a page refers to content from a second server, the browser reacts to the instruction to call the first program by obtaining and running the first program. This first program (i) analyses the page, (ii) initiates a process which causes the second server to transmit content to the browser, and (iii) formats the content received from the second server into the format of the page, so as to display to the user a page integrating the content into the format of the page.

In order that the first program is capable of performing step (i), it must have access to the page. To enable this to occur in a way which is consistent with the operation of almost all conventional present browsers, the invention proposes that the first program may cause the page to be downloaded a second time, e.g. terminating the first rendering of the page as soon as the first program is called.

This may be performed by giving the browser access to a second program. For example, the first program may automatically call the second program. The second program, which may be written in a programming language such as Java as an applet which runs within the page (e.g. in background), causes the browser to communicate with the first server and download the page a second time, this time passing it to the first program. Note, that for many present browsers, it is possible to avoid the requirement for a second program, and make the first program responsible for all communication with the first server, e.g. to request a second download.

Furthermore, for many browsers which are presently available, it is unnecessary to download the page for a second time. Instead, the first program may be written (e.g. in Javascript) to interact with the browser, so as to receive from the browser any data which is in the page.

Conveniently, the command in the page which causes the browser to call the first program indicates a location where the first program is stored. The first program preferably includes within it the address of a location where the second program (if any) is stored.

In embodiments which employ a second program, the first and second programs may be stored on the same server as each other. This may be the first server, the second server, a server which acts as the user's ISP, or an additional server. Alternatively, either of the first and second program segments (or more preferably both of them) may be directly available to the terminal, e.g. by being stored in the memory of the terminal, or on a recording medium which is readable by the terminal. Alternatively, the second server may be provided on the first server.

In order that the first program segment is capable of performing step (ii), the present invention proposes that it uses the address of the second server on the page to set up a communication with the second server, downloads from the second server a third program segment, and causes the third program segment to run. The third program segment may be an applet, e.g. written in Java, which runs in background within the page. It can communicate with the second server to pass to the second server enough information to satisfy the security requirements of the second server.

The data file(s) stored on the second server may be any data files containing content in any format, including image data, video data, audio data, or data in a format required by a certain application. It may also be a data file of text data, e.g. ASCII data. Preferably, the content has a size of at least 1kB, at least 5kB or at least 10kB. Due to limitations of the present speed of the internet the present inventors have found that the operation of the present invention may be inconveniently slow if the amount of data is more than 25kB. However, with gradual improvements in the speed of the internet, it is expected that in the future it may become convenient to include content which has a size of up to 100 KB, up to 1MB, or even up to 10 MB.

Preferably, the data is or includes text data, that is content which is not, or at least not entirely, composed of an image. For example, it may include text which defines a web page, such as data written in HTML, DHTML, Javascript, or XML, or a section of another programming language. It may further include a portion of natural language, such as one or more sentences.

Note that the first aspect of the invention may be generalised to the concept of providing an HTML file including (i) an instruction for calling a first program, and (ii) one or more further instructions which are not in HTML but which can be read by the first program (in the discussion presented above, one such further instruction is the instruction to obtain content from a second server). This concept is a second, independent aspect of the invention, which is not limited to including content from a second server.

For example, instead of instructing the browser to contact a second server, the further instruction(s) may include at least one definition of a command, and then instances of this command. The definition is written in a format which is ignored by the browser (which simply interprets HTML) but which is appropriate to be read by the first program. The first program interprets the definitions of the command, and then, at each instance of the command, implements that command.

Note that, in principle, there is no limit either to the number of commands which can be defined in this way, or to the number of instances of each command on the page.

Thus, the second aspect of the invention makes it possible for a provider of HTML to provide functionality which is not available in HTML within the context of an HTML page. For many users, this approach of defining commands as part of an HTML page, will be preferable to the mechanisms for defining commands which are available using XML, since XML requires that a separate file is written of function definitions.

### Brief description of the Figures

Embodiments of the invention will now be described, for the sake of example only, with reference to the accompanying Figures, in which:
Figure 1 shows a first embodiment of the invention;
Figure 2 is a flow diagram of the process of Figure 1;
Figure 3 shows a second embodiment of the invention;
Figure 4 is a flow diagram of the process of Figure 3;
Figure 5 shows a third embodiment of the invention;
Figure 6 is a flow diagram of the process of Figure 5;
Figure 7 shows a fourth embodiment of the invention;
Figure 8 is a flow diagram of the process of Figure 7;
Figure 9 shows a fourth embodiment of the invention;
Figure 10 is a flow diagram of the process of Figure 9;
Figure 11 shows a fifth embodiment of the invention; and
Figure 12 is a flow diagram of the process of Figure 12.

### Detailed description of the embodiments

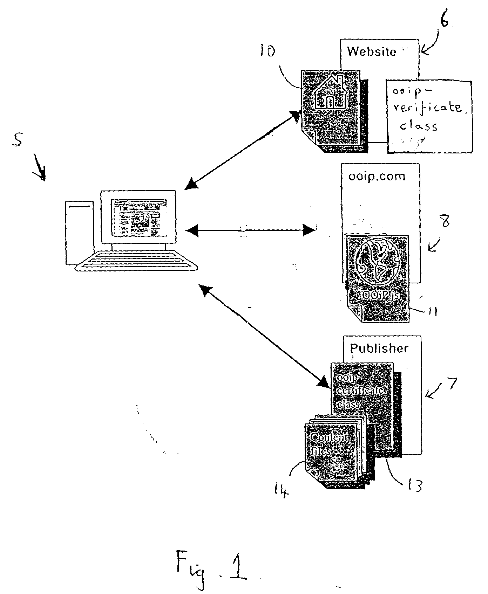

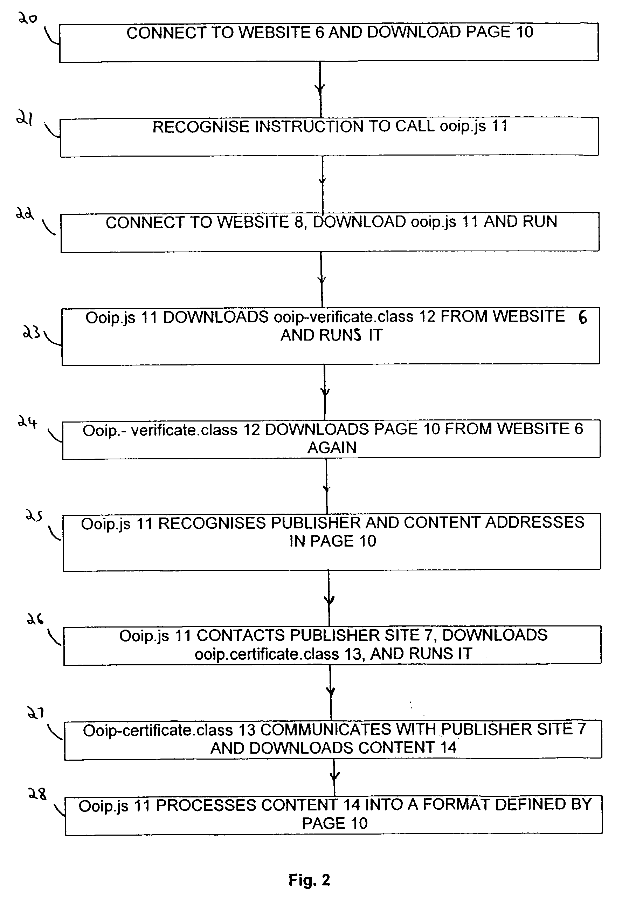

A first embodiment of the invention will now be described with reference to Figures 1 and 2. Fig 1 shows the terminal 5 of a user. For simplicity the ISP of the user is omitted from the figure. In performing a method according to the invention, the terminal 5 communicates with three websites 6, 7, 8 described below.

In this example the browser of the user 5 may be any standard browser, such as Netscape Navigator or Internet Explorer. The arrangement of Fig 1 is such that it can work with practically any present day browser (any browser which supports HTML, Java and Javascript), but in fact certain features of Fig 1 can be omitted in the case that the browser is known to be of a particularly advanced variety (such as Internet Explorer 5.0), as described below. That is, as browser technology advances, and the Internet community becomes able to rely on an overwhelming number of users possessing a technologically advanced browser, it will be possible to omit or vary certain features of the embodiment of Fig 1.

Figure 1 shows (in addition to the terminal 5 of the user) three websites: a first website 6, for example having an address www.website.com, supports one or more pages, including a page 10. The page 10 includes two HTML-like codes ("tags") within it:
Code 1: <script src=http://www.ooip.com/ooip.js><script>
Code 2: <ooip src=http://www.publisher.com/dir/file.ext>

Note that, to make the embodiment function in even in the case that the user's browser is Netscape 4, without causing a possible sequirity problem, Code 1 should be replaced by a modified code such as
<script src=http://www.ooip.com/ooip.js><script>
<script>eval (ooipinit) </script>. Here ooipinit is a variable used in ooip.js, such that, as will be clear to a skilled reader, the extra tag has the effect that Netscape 4 regards ooip.js as an integral part of the page. Thus, ooip.js is enabled to download the page from the server 6 a second time, which Netscape 4 requires in this embodiment. This replacement of Code 1 by the modified code will be assumed in the rest of this document whenever it is desired to enable the embodiment to operate with Netscape 4, except that, in the embodiments given below in which the program 11 is stored on the server 6, the replacement is unnecessary.

Website 8, for example having an address www.ooip.com, stores a first program file 11 (named ooip.js) written in Javascript. As well as the page in HTML, the server 6 stores a second program file 12 (named ooip-verificate.class), which is an applet written in Java.

A third website 7 is a publisher, for example having the address www.publisher.com, stores, or has direct access to, content in one or more content files 14 (of which one has an address there of /dir/file.ext). It also stores a third program file 13 (named ooip-certificate.class), which is an applet written in Java. Websites 6, 7 and 8 are generally supported by different respective servers.

The sequence of steps in the method performed by the terminal 5 is shown in Fig 2. In a first step 20 (the only step of which the user of the terminal 5 is aware), the user instructs the terminal 5 to connect to website 6 and download page 10. In doing so, the browser of terminal 5 reacts to the tag "code 1", recognising it as an instruction to call and run the file ooip.js 11, and as an indication that it is stored on the website 8 (step 21).

Accordingly, the browser connects to website 8, downloads ooip.js11 and runs it within the page 10 (step 22). Program ooip.js11 in turn instructs the browser to download file ooip-verificate.class12 from the website **6**, and run it (step 23) in background on the page 10. Since ooip-verificate.class is running within the page 10, it is able to communicate with the site 6.

Program ooip-verificate.class 12 downloads page 10 from website 6 a second time, and passes it to ooip.js11 for processing (step 24). Ooip.js11 recognises the tag "code 2" in the web page 10, and from it extracts the address of the publisher website 7, and the address of one content file 14 on that site (step 25).

Program ooip.js 11 contacts the publisher site 7, downloads ooip-certificate.class13, and runs it in background on web page 10 (step 26). Since the program file 13 is downloaded from site 7, it can be arranged to communicate with the site 7 and copy the content file 14 to the program 11. The publisher can make sure that the program 13 is only configured to extract information from the site 7 if the site 6 and/or the terminal 5 fulfil certain conditions. Thus, program 13 ensures that the valuable content 14 is only released in conditions acceptable to the publisher, and thereby provides security.

Program ooip-certificate.class13 communicates with the publisher site 7, performing all identification required by the publisher site 7 in order to make content available, and thereby downloads content from the file 14 corresponding to the address in the tag "code 2" (step 27).

Finally, the program ooip.js11 processes content from the publisher site 7, in a format defined by the code (e.g. HTML code) in page 10, so as to present the content from the publisher site 7 as an integral part of the page 10, just as if the content were stored on the website 6 (step 28).

The description of the first embodiment above assumes that page 10 includes only a single reference (code 2) to external content, but in fact the site 6 may contain references to a plurality of different content files 14 on the publisher site 7, or even to content on a plurality of publisher sites 7. In this case, the method of Figure 2 describes only the processing of the first two tags "code 1" and "code 2". The web page 10 may include further tags in the form of "code 2", but each specifying a different respective content file 14 of the publisher 7, or a content file of a different publisher site. For each such tag, the method repeats the steps 25 - 28 in order based on the publisher and content address contained within the tag.

As mentioned above, the function of the Java file 12 is to communicate with the website 6, so as to download the page 10 for a second time, so thatit can be processed by the program file 11. In certain browsers this second reading of the web page 10 is not necessary. For example, in Internet Explorer 5.0 the browser is capable of directly reading the page 10, so that a second downloading is unnecessary. In other words, it is possible for the Java file 12 to be omitted from the embodiment if it is assumed that the browser can directly read page 10.

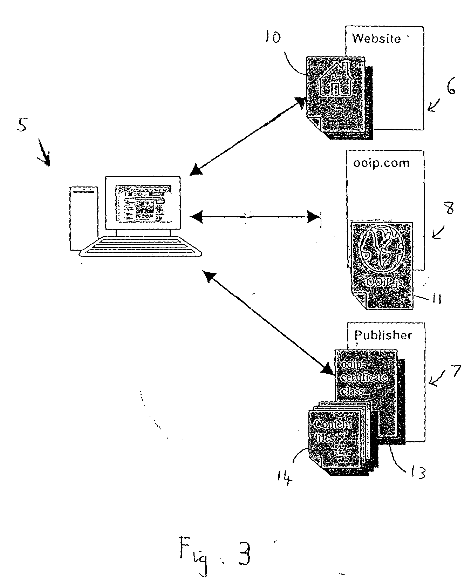

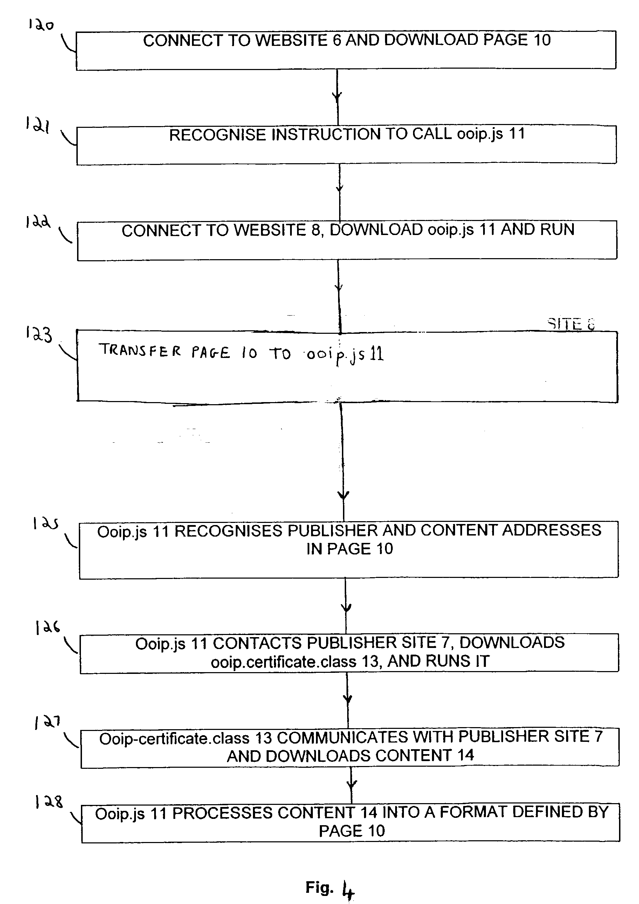

A second embodiment which does not employ program file 12 is shown in Figures 3 and 4. In figure 3, items which correspond to figure 1 are given corresponding reference numbers. In figure 4, items which correspond to figure 2 are given reference numerals 100 higher. The steps 23 and 24 in Figure 2 are replaced by a step 123 of transferring the web page 10 to the program 11 without downloading it for a second time.

Conversely, if it is not known whether the browser is capable of directly reading the page 10, the Javascript file 11 could, as it runs, interrogate the browser to determine whether or not it has already memorised the website 10, and, in the case it has, replace steps 23 and 24 in Figure 2 by the step 123 shown in Fig. 4.

The embodiments shown in Figures 1 and 3 have several beneficial features. Firstly, there is no requirement for the website 6 to do any processing of the content to put it into its own format, and it is not even necessary for the website 6 to store the two program files 11, 12. Accordingly, the server for site 6 may have very limited system specifications. Furthermore, the owner of site 6 does not have to have advanced programming knowledge to set the site up. Secondly, since the program file 11 are publicly available on a site 8, there can be many sites like site 6, each of them referring users to the site 8 by including the tag "code 1" on their respective pages. Apart from the saving in storage this entails, it also means that the embodiment can be updated to use the latest version of file 11 simply by updating one site, that is 8, even if there were a plurality of websites 6.

A further advantageous feature of these embodiments is that the publisher only needs to store, besides the content files 14, the program file 13, which acts as the key into his site. The program 13 encodes all the security requirements the publisher 7 sets to allow access to his content.

Furthermore, statistical information about the usage of the invention can be collected easily at the website 8, which for example can record the number of times that it has been contacted, and/or by which terminals 5.

A further advantage of this arrangement (which is common to all the embodiments described below) is that the program file 13 can be designed to transmit (e.g. to the publisher site 7) data concerning how the user makes use of the content, for example how long the user leaves page 10 open on his browser. Such information can be very useful to the publisher 7 in establishing the value of the content it stores and/or in determining a financial fee (e.g. levied on to the website 6, or directly to the user 5) for accessing the content in site 7.

The embodiment shown in Fig. 3 is beneficial over that shown in Fig.1 in that the website 6 only has to store two tags in order to include the content from a different site. In particular, users do not like importing JAVA files (such as program 12) to their sites, since they are in unreadable binary format.

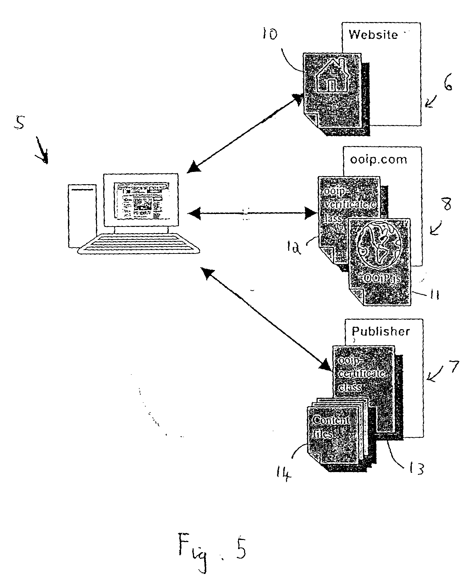

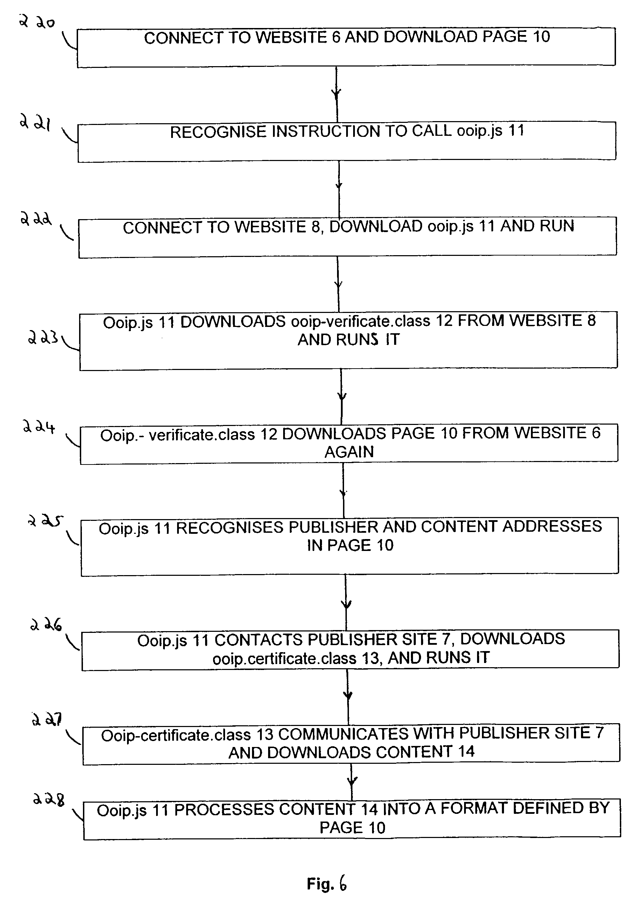

Figures 5 and 6 show a third embodiment of the invention in which both the programs 11 and 12 are stored on the server 8. This embodiment, like that of Fig. 3, avoid the need for any programs to be stored on the site 6. It is appropriate for many modern browsers.

A disadvantage of the embodiments of Figs 1,3 and 5, however, is that they are reliant upon the continuing operation of the program storage website 8. If website 8 goes down, then the user's browser will generate an error message upon attempting to open page 10. This disadvantage is overcome, however, by the following embodiments.

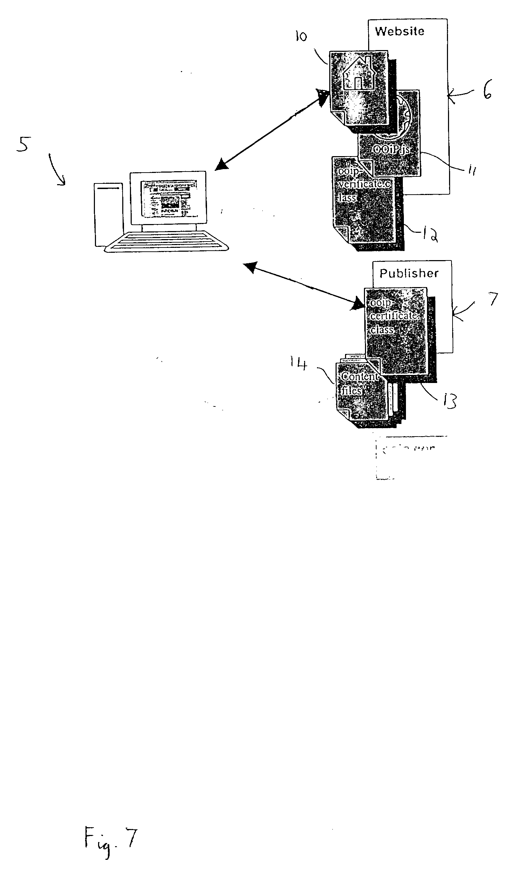

Turning to Fig 7, a fourth embodiment of the invention is shown. In this fourth embodiment the two program files 11, 12 are stored on the website 6 itself. This makes the existence of website 8 unnecessary.

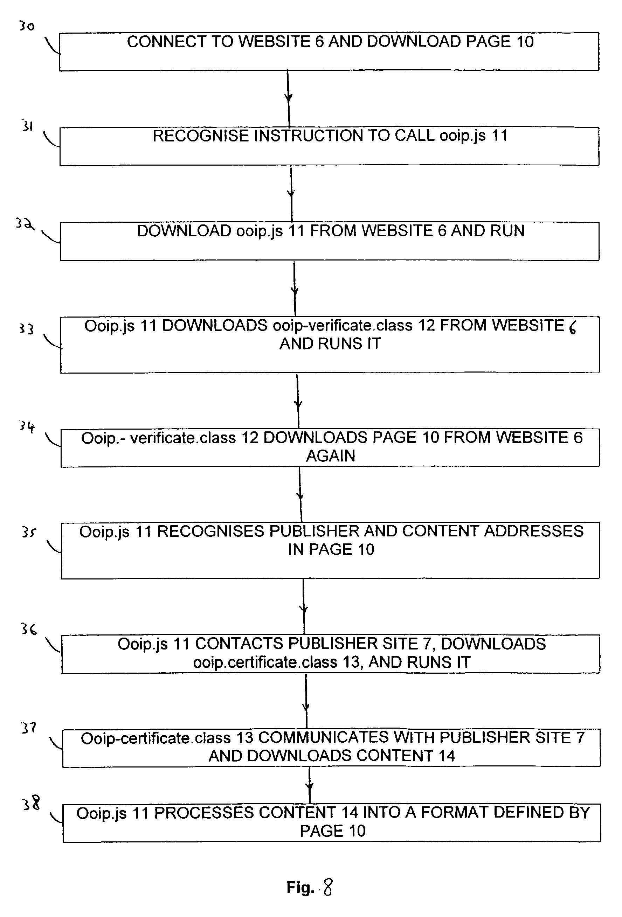

A flow diagram for the method performed by the terminal 5 in the case of the embodiment of Fig 7 is shown in Fig 8, and differs from the method of Fig 2 only in that in steps 32 and 33 (corresponding to steps 22 and 23 of Fig 2) the two program files 11, 12 are downloaded from the website 6.

In the case of the fourth embodiment, the two HTML-like codes (tags) included in page 10 are as follows:
Code 1: <script src=http://www.website.com/dir/ooip.js><script>
Code 2: <ooip src=http://www.publisher.com/dir/file.ext>

As in the first embodiment, there may be more than one tag in the form of "code 2", if multiple content files 14 in the publisher 7 are to be accessed, or if content files are to be downloaded from a plurality of publisher sites 7.

A benefit of the fourth embodiment over the first embodiment is that the website 6 is not reliant upon a program storage site 8. Conversely, however, two disadvantages of the second embodiment in comparison to the first embodiment are that (i) since website 6 stores the program files 11,12 it may be relatively difficult to keep these two program files up to date, and (ii) statistical information is most conveniently collected on the website 6, so that if it is desired to collate information about how users interact with a plurality of sites like site 6, information must be collected from each of the plurality of sites.

As mentioned above, a disadvantage of the fourth embodiment is that users do not like to store JAVA programs, such as program 12. This problem can be eliminated, if, as in the second embodiment of the invention, the programs 11, 12 are replaced by a single Javascript program 11 stored on the website 6. Furthermore, as mentioned above, since in this case the program ooip.js is on the server 6, the embodiment operates even in the case that the browser is Netscape 4 and even if Code 1 is not replaced by the version of Code 1 suitable for Netscape 4 given above under the explanation of the first embodiment.

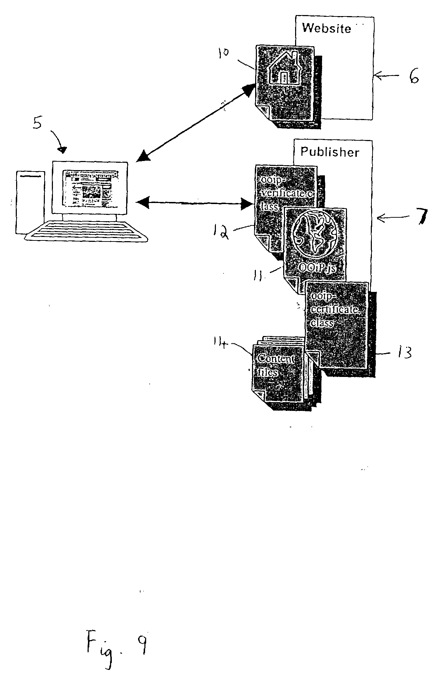

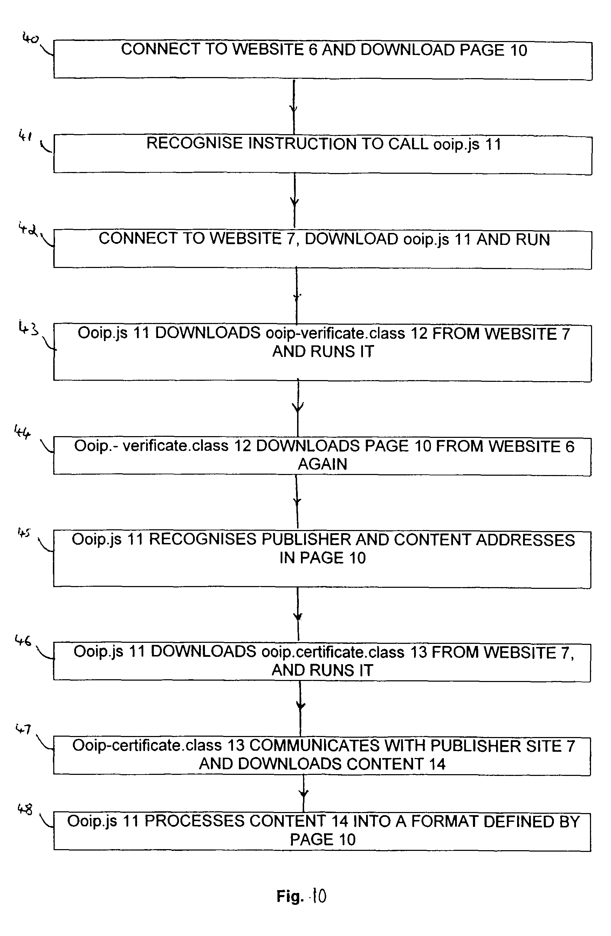

Turning to Figure 9, in the fifth embodiment of the invention the two program files 11, 12 are stored on the site of the publisher 7. Figure 10 shows the flow diagram of the method performed by the terminal 5 in this case.

In this embodiment, the two HTML-like tags in the page 10 are:
Code 1: <script src=http://www.publisher.com/dir/ooip.js><script>
Code 2: <ooip src=http://www.publisher.com/dir/file.ext>

Fig 8 differs from Fig 2 only in that in steps 22 and 23 are replaced by steps 42 and 43 in which the browser downloads the two program files 11, 12 from the publisher site 7.

In the fifth embodiment, as in the second and third embodiments, website 6 only needs to store the two short HTML-like tags, and as in the fourth embodiment there is no reliance on an external program storage site. However, as in the fourth embodiment, there is a risk that the publisher 7 does not update the program files 11, 12 (at least not as frequently as a program storage site 8 would). Furthermore, statistical information will be collected at the publisher, and thus usage of the invention across a plurality of publishers may be difficult to collate.

As in the other embodiments, the website 10 can employ content from more than one content file 14 of publisher 7, or a content file of a different publisher, by including one or more further tags in the form of "code 2", each specifying the address of the respective content file on a publisher site. In this case, steps 45 to 48 are repeated for each of these tags.

In fact, in the fifth embodiment it is possible for the two program files 12, 13 (both of which are written in Java) to be combined into a single Java program file, which organises both communication with the website 6 and with the publisher site 7. An advantage of keeping these two program files separate, as shown, however, is that it is easier to modify each independently. For example, the owner of the site 7 may modify entry requirements to the site by modifying program file 13 without having to understand program file 12.

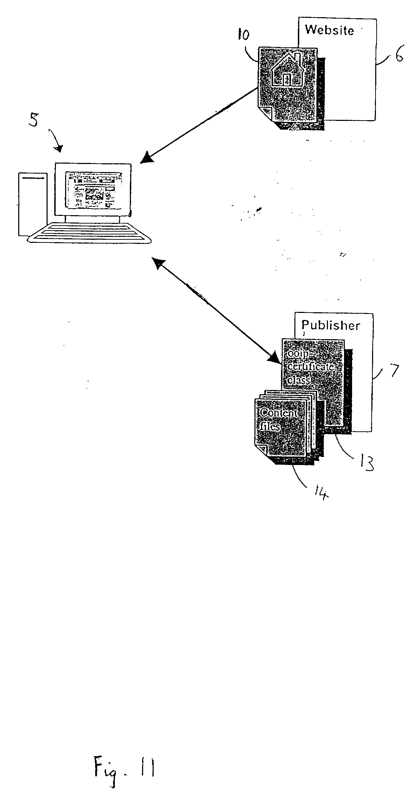

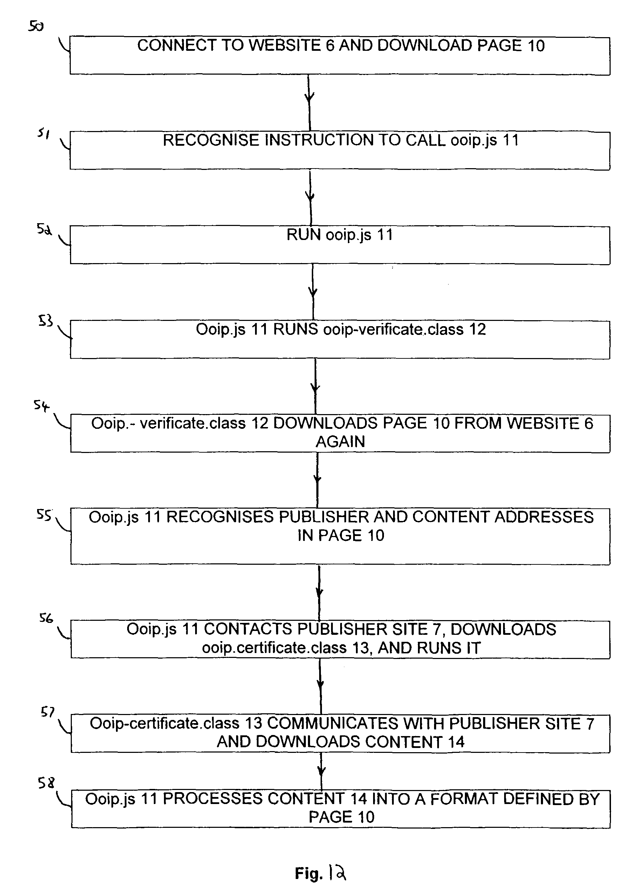

Figs. 11 and 12 show a sixth embodiment of the invention in which the two program files 11, 12 are stored at the terminal 5 (or alternatively at the ISP of the user), so that they are available to the terminal 5 without downloading them whenever it is desired to access a page 10 requiring content from a publisher 7. The two program files 11, 12 can be provided to the terminal 5 as portion of a "plug-in" program, that is software transmitted to the terminal 5 (using a recording medium or telecommunication) and kept there (e.g. in the memory of terminal 5).

In this case, the tags in the page 10 may be:
Code 1: <script src=dir/ooip.js><script>
Code 2: <ooip src=http://www.publisher.com/dir/file.ext>

Advantages of the arrangement of Figure 11 are that it is unnecessary to repeatedly transmit the program files 11, 12. Furthermore, it is possible to control which users are given access to the invention (and thus if desired require a payment from each user), by controlling distribution of the plug-ins. A disadvantage of this system, however, is that collating statistical information about which users are employing the invention, is less straightforward than in the first three embodiments. It is possible however, by the plug-in program to periodically transmit (e.g. to a central location) data concerning the usage the terminal 5 has made of the invention.

Although the embodiment of Fig. 11 has been explained employing both a Java and Javascript file in the plug in, in fact the plug-in product may be written otherwise, for example it need not include a Javascipt file.

A further possibility is that the program files 11, 12 are available in an ISP of the terminal 5, so that the terminal 5 hosts download them, but only by a relatively fast and efficient operation.

Although the above six embodiments of the invention have been explained separately, in principle it is possible to combine them. For example, in the first embodiment the tag "code 1" can be replaced by a more complicated tag, which first causes the browser to investigate whether the plug-in of Figure 11 is installed in the terminal 5, and only connects to the server 8 in the case that the two program files 11, 12 are not already available in the terminal 5.

Although the embodiments have been explained in relation to presently popular programming languages, the invention may be implemented using different programming languages, including languages not yet available. For example, if the page 10 is written in XML, rather than HTML, the tags "Code 1" and "Code 2" can be revised accordingly.

The sixth embodiments of the invention employs a plug-in product, but alternatively, in a seventh embodiment of the invention, the browser itself is written to include the functionality of the plug-in product as a part of the browser software. That is, the browser is not one of the presently available browsers, such as Internet Explorer 5.0, but a browser which recognises a prompt in a page on a first server as a trigger to access (and optionally format) content in a file determined by the prompt and stored on a second server.

A first, and relatively straightforward, possibility in this seventh embodiment is for the browser to be a computer program product (e.g. a recording medium product containing software data, or a downloadable program), including the two programs ooip.js and ooip-verificate.class, and a (conventional) browser with a straightforward modification which causes it to call ooip.js from the computer program product when the prompt is met in a page of the first server. As in the preceding embodiments, program ooip.js contacts the publisher site, downloads ooip-certificate.class, and runs it in background on web page, as described above in relation to the earlier embodiments, to permit access to the content in the publisher site.

In more advanced (and realistic) realisations of the seventh embodiment of the invention, the browser software is integrated, and the required aspects of the functionality of ooip.js and/or ooip-verificate.class are produced using portions of the browser software, which may not indeed be written in Java, Javascript or any other similar (e.g. high-level) language.

Once browsers according to the seventh aspect of the invention have become common, it will be expedient to establish a protocol for the prompt provided in the first page which is simpler than the prompts based on two tags explicitly given above in relation to the first five aspects of the invention.

Any of the embodiments of the invention illustrated above are also applicable for running the second aspect of the invention. In these embodiments, the two tags in the HTML webpage 10 are replaced by:
Code 1: <script src=dir/ooip.js><script>
Code 2: <tagdef ID=NEWCOM XXXXXXXX -->
where the X symbols stand for a section of a programming language.

Since Code 2 is not a known HTML-tag by the browser, Code 2 does not interfere with the operation of the browser. However, the first program 11, which is called by browser upon reading Code 1, is adepted to read any tag which begins with <tagdef as a definitions of the command word which follow, in this case "NEWCOM". Specifically, the definition of NEWCOM is the section of programming language shown by the X symbols. Note that this concept is applicable whichever programming language is used (e.g. the programming language may be XML), and hence specific examples will not be given here.

The HTML page then includes instances of the command NEWCOM (e.g. each within a tag beginning <NEWCOM and optionally also arguments for the function). At each instance, the program 11 performs the function defined by the section of programming language.

In principle, the function defined by Code 2 may be any processing task, such as any task which may be defined in XML. Providing this sort of functionality as a feature of an HTML page may be preferable to users who are already familiar with HTML, and who which to have the ability to define additional functions without the difficulty of fully learning XML.

Although the invention has been explained above with reference to specific embodiments, many variations on the method are possible within the scope of the invention as will be clear to a skilled worker. For example, although in the preceding discussion it has been assumed that each site is supported by only a single server, the invention is not limited in this respect, and each of the website 6 and the publisher site 7 can be supported by more than one server. Furthermore, the invention is also applicable in a case in which (e.g. by chance) the website 6 is actually supported by the same server as the publisher site 7, so that in this case the invention is integrating data from two sites on the same server, rather than from two servers.

## Claims

1. A method of combining data from two or more servers, the method comprising:
receiving, from a first server, page data including (i) first data for defining a web page and a format of the page, (ii) second data for triggering communication with a second server, and (iii) third data indicating an address of at least one file on the second server, the file containing content data;
reacting to said second data by communicating with the second server to cause the second server to permit access to said file;
receiving the content data in said file from the second server;
formatting the content data according to said format; and
presenting the formatted content data within the web page.

2. A method according to claim 1 in which said communication with said second server includes transmitting to said second server data identifying said first server.

3. A method according to claim 1 in which said communication with said second server includes transmitting to said second server data identifying the user.

4. A method according to claim 1 in which said step of reacting to the second data includes causing the operation of a first program, said first program managing said step of communicating with the second server, and performing said steps of presenting and formatting said content data.

5. A method according to claim 4 in which the step of reacting to the second data includes causing the operating of a second program which transmits to the first server an instruction to download at least some of said page data for a second time.

6. A method according to any preceding claim, in which said step of reacting to the second data includes downloading said first and program from said first server, said second server or an additional server.

7. A method according to any preceding claim in which said step of communicating with said second server includes downloading from said second server and running a third program, the operation of said third program causing the second server to transmit the content data in said file.

8. A method according to claim 7 in which said third program encodes at least one criterion determining whether access to said file should be allowed, the operation of said third program verifying whether said criterion is met before causing the second server to transmit the content data in said file.

9. A method according to claim 7 in which said third program transmits information comprising the identity of at least one of said terminal, a recipient of the information collating said information to form a record of the usage of the content data.

10. A method according to claim 7 further comprising using said record to generate an invoice for usage of the content data.

11. A method according to any preceding claim in which the content data includes at least one portion of a programming language encoding a web page.

12. A method according to any preceding claim in which the content data includes at least one sentence of a natural language, preferably in ASCII code.

13. A method according to any preceding claim in which the format includes at least one of (i) font colour, (ii) background colour, (iii) font size, or (iv) font typeface.

14. A method of combining data from two or more servers, the method comprising:
receiving, from a first server, page data including (i) first data for defining a web page, (ii) second data for triggering communication with a second server, and (iii) third data indicating an address of at least one file on the second server, the file containing content data;
reacting to said second data by communicating with the second server to perform an authorization procedure, thereby to cause the second server to permit access to said file;
receiving the content data in said file from the second server; and
presenting said page based on a combination of said first data and said content data.

15. A method according to claim 14 in which said authorization procedure includes receiving from said second server a third program and running the third program, the third program verifying whether at least one authorization criterion is met, and in the case that it is met, signalling to the second server to cause the second server to permit access to said file.

16. A method according to claim 14 in which said authorization procedure includes verifying that the identity of the first server meet satisfies a criterion.

17. A method according to any preceding claim in which the page data includes additional content data, said step of presenting said page including presenting said content data in combination which said additional content data.

18. A method of processing data stored on sever, the method comprising:
receiving from the server an HTML page, the page containing (i) an HTML instruction to access and run a program written in Javascript; and (ii) at least one instruction in a format readable by the Javascript program;
accessing and running the Javascript program, the Javascript program reading and performing the instruction.

19. A method according to claim 18 in which said instruction is an instruction to trigger communication with a second server to download at least one file from the second server, the file containing content data, the method further including a step of presenting a display to the user based on the content data and formatted using format data included in the HTML page.

20. A method according to claim 18 in which the instruction is a command definition statement defining a function associated with a command, the HTML page containing at least one instance of the command, and the Javascript program reacting to the or each command instance by implementing the function associated with the command.

21. A system comprising a terminal, the terminal being arranged for internet communication, and to perform a method according to any of claims 1 to 20

22. A computer program product which is readable by a data processing device and contains program instructions to cause the device to perform a method according to any of claims 1 to 20.

23. A first server storing a page suitable for use in any of a method according to any of claims 1 to 20.
